# EUROPÄISCHE PATENTANMELDUNG

(11) **EP 1 256 832 A2**
(43) Veröffentlichungstag der Anmeldung: **13.11.2002**
(21) Anmeldenummer: 02009090.8
(22) Anmeldetag: 24.04.2002
(51) Int. Cl.: G02B 17/08

(54) **Optische Anordnung für einen Dual-Mode-Suchkopf**

(30) Priorität: 11.05.2001 DE 10123050
(71) Anmelder: Bodenseewerk Gerätetechnik GmbH, 88662 Überlingen (DE)
(72) Erfinder: Baumann, Rainer, 88662 Überlingen (DE); Barenz, Joachim, 88690 Uhldingen (DE); Tholl, Hans Dieter, 88690 Uhldingen (DE)
(74) Vertreter: Weisse, Renate Dr.

(57) **Zusammenfassung**

Eine optische Anordnung für Dual-Mode-Suchköpfe zur Abbildung einer Objektszene auf zwei Detektoren, enthält ein abbildendes optisches System (10) mit einem Abbildungsstrahlengang, strahlenteilenden Mitteln (22) zum Aufteilen des Strahlengangs in einen ersten und einen zweiten Teiltrahlengang (38, 48), einem ersten Detektor (46), auf welchen die Objektszene durch den ersten Strahlengang abgebildet wird und einen zweiten Detektor (58), auf welchen die Objektszene durch den zweiten Strahlengang abgebildet wird, wobei die strahlenteilenden Mittel (22) von einem massiven Körper gebildet sind, der eine strahlteilende Trennfläche (28) aufweist, die so liegt, daß der transmittierte (38) und der reflektierte Strahl (48) eines senkrecht zur Körperoberfläche in den Körper eintretenden Strahls (32) senkrecht zur Körperoberfläche (34, 36) aus dem Körper (22) austritt. Die strahlenteilenden Mittel können von einem strahlteilenden Würfel (22) gebildet sein, der aus zwei Würfelhälften (24, 26) besteht, die entlang einer Würfeldiagonalfläche (28) miteinander verbunden sind. Auf einer der Verbindungsflächen (28) kann ein dichroitischer Interferenzfilter angebracht sein.

## Beschreibung

### Technisches Gebiet

Die Erfindung betrifft eine optische Anordnung für Dual-Mode-Suchköpfe zur Abbildung einer Objektszene auf zwei Detektoren, enthaltend
(a) ein abbildendes optisches System (10) mit einem Abbildungsstrahlengang,
(b) strahlenteilenden Mitteln zum Aufteilen des Strahlengangs in einen ersten und einen zweiten Teilstrahlengang,
(c) einem ersten Detektor, auf welchen die Objektszene durch den ersten Strahlengang abgebildet wird und
(d) einen zweiten Detektor, auf welchen die Objektszene durch den zweiten Strahlengang abgebildet wird

### Stand der Technik

Dual-Mode-Suchköpfe sind aus der DE 42 22 642 A1 bekannt. Sie umfassen bildverarbeitende optische Sensoren, die in Zielsuchköpfen für die autonome Lenkung von Flugkörpern verwendet werden. Die Sensoren des genannten Standes der Technik umfassen weiterhin einen LADAR-Sensor. LADAR bedeutet, in Anlehnung an Radar, "Laser Detection and Ranging". Ein Laserstrahl tastet dabei das Ziel Punkt für Punkt ab und der reflektierte Strahl wird mittels eines Strahlteilers von der übrigen Strahlung in einen zweiten Strahlengang getrennt und separat mit einem zweiten Detektor detektiert.

Es ist bekannt die Strahlenteilung in zwei Teilstrahlengänge mit zwei Spektralbereichen mittels einer zur optischen Achse um 45° verkippte, dichroitische Strahlteilerplatte vorzunehmen. Die Strahlen können dann mit zwei verschiedenen Detektoren aufgenommen werden.

Die verkippte Strahlteilerplatte mit endlicher Dicke verursacht im nicht-parallelen Strahlengang einen nicht korrigierbaren Astigmatismus in eine Richtung. Sie kann daher nur im parallelen Strahlengang vor dem Objektiv oder in einem parallelen Strahlengang zwischen den Spiegeln und Linsen des Objektivs angeordnet werden. Dadurch wird die Anordnung selbst bei einer einfachen einstufigen Optik ohne Zwischenbild sperrig.

### Offenbarung der Erfindung

Es ist Aufgabe der Erfindung, eine optische Anordnung der eingangs genannten Art zu schaffen, bei der die strahlteilenden Mittel auch im nicht-parallelen Strahlengang angeordnet werden können ohne daß nicht-korrigierbare Abbildungsfehler entstehen.

Erfindungsgemäß wird die Aufgabe dadurch gelöst, daß die strahlenteilenden Mittel von einem massiven Körper gebildet sind, der eine strahlteilende Trennfläche aufweist, die so liegt, daß der transmittierte und der reflektierte Strahl eines senkrecht zur Körperoberfläche in den Körper eintretenden Strahls senkrecht zur Körperoberfläche aus dem Körper austritt. Die strahlenteilenden Mittel sind vorzugsweise von einem strahlteilenden Würfel gebildet, der aus zwei Würfelhälften besteht, die entlang einer Würfeldiagonalfläche miteinander verbunden sind. Es ist aber auch ein Parallelepiped oder eine ähnliche geometrische Form denkbar.

Bei einer solchen Anordnung entspricht der Körper für beide Teilstrahlengänge, dem reflektierten und dem transmittierten Teilstrahl, aufgefaltet einer senkrecht zur optischen Achse stehenden dicken Platte. Da die Platte nicht verkippt ist, verursacht sie im nicht-parallelen Strahlengang keinen unkorrigierbaren Astigmatismus, sondern lediglich infolge Dispersion eine chromatische Aberration. Dieser Farblängsfehler kann durch Linsen hinter dem Strahlenteiler bei beiden Teilstrahlengängen gut korrigiert werden.

In einer bevorzugten Ausgestaltung der Erfindung ist auf einer der Verbindungsflächen ein dichroitisches Interferenzfilter angebracht. Dieses Filter ermöglicht die Trennung nach Wellenlängenbändern. Die Verbindungsflächen grenzen vorzugsweise unmittelbar und ohne Luftspalt aneinander. Hierzu können die Verbindungsflächen mittels einer Verklebung verbunden sein, die im betrachteten Wellenlängenbereich eine hohe Durchlässigkeit aufweist oder mittels optischen Ansprengen miteinander verbunden werden. Durch die Vermeidung eines Luftspaltes wird die Totalreflexion der Strahlen beim Austritt aus dem Strahlenteiler ausgeschlossen.

Die optische Anordnung ist vorzugsweise als zweistufiges Objektiv mit einem Zwischenbild ausgebildet. Dadurch wird die Baulänge etwas größer, die Eintrittspupille kann jedoch direkt in die Eintrittsöffnung gelegt werden und kann durch die nachfolgenden Abbildungselemente als Austrittspupille abgebildet werden und zum Beispiel in die Ebene einer Kaltblende gelegt werden. Dadurch wird eine hohe Kaltblendeneffektivität erreicht.

In einer bevorzugten Ausgestaltung der Erfindung sind die strahlteilenden Mittel in der Nähe des Zwischenbildes angeordnet. Dann können die Abmessungen der strahlteilenden Mittel und der nachfolgenden Abbildungselemente klein gehalten werden.

In der frei zugänglichen Zwischenbildebene kann eine Laserschutz-Vorrichtung zur Abwehr von Laser-Gegenmaßnahmen angeordnet sein, wie er beispielsweise in der DE 197 34 810 A1 oder der DE 197 24 080A1 beschrieben ist.

Weitere Ausgestaltungen der Erfindung sind Gegenstand der Unteransprüche. Ein Ausführungsbeispiel der Erfindung ist nachstehend unter Bezugnahme auf die beigefügten Zeichnungen näher erläutert.

### Kurze Beschreibung der Zeichnungen

- Fig. 1: ist eine Darstellung des Strahlengangs in einer abbildenden Optik mit einem würfelförmigen Strahlenteiler

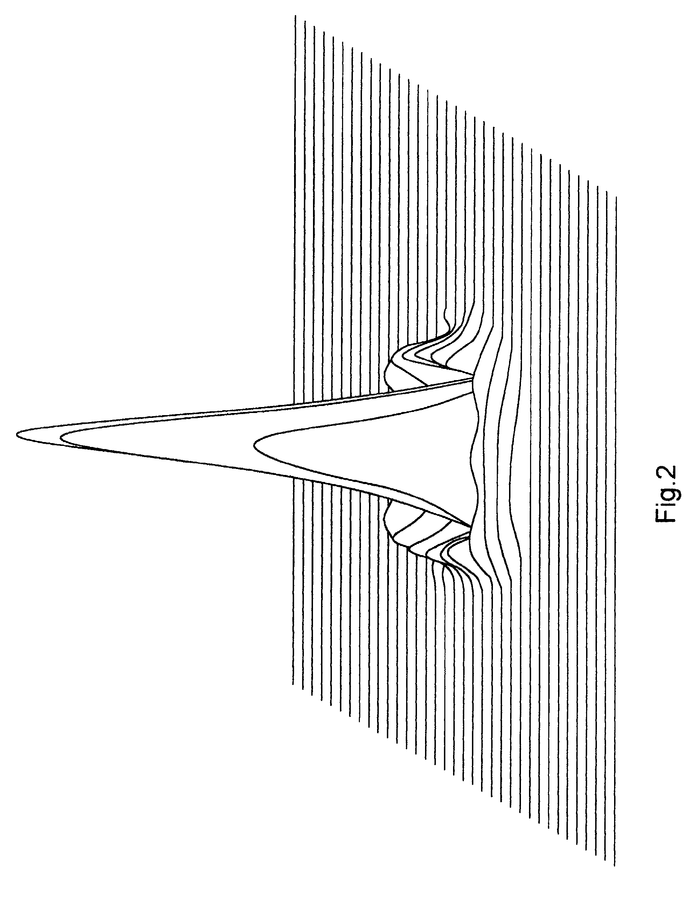

- Fig.2: zeigt die Intensitätsverteilung einer punktförmigen Lichtquelle in der Bildebene der Optik in Fig. 1
- Fig.3: ist eine Punkt-Verteilungs-Funktion an einem der Detektoren der Optik aus Fig.1

### Beschreibung eines Ausführungsbeispiels

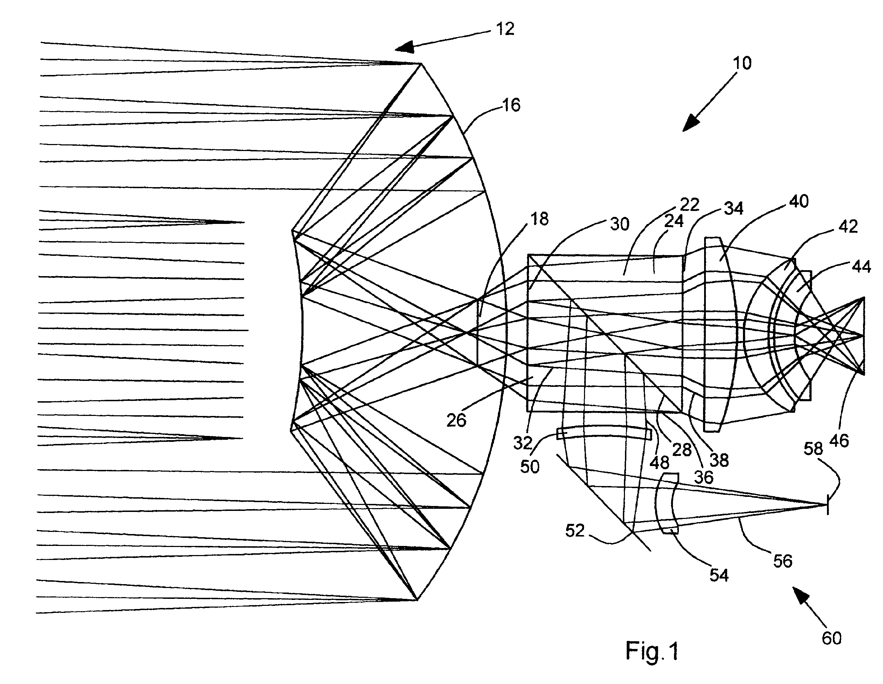

In Fig. 1 ist mit 10 ein abbildendes optisches System bezeichnet. Das abbildende optische System umfasst ein Primärobjektiv 12 und ein Sekundärobjektiv 14. Das Primärobjektiv 12 ist ein Zweispiegelobjektiv vom Cassegrain-Typ. Die von einem (nicht dargestellten) Objekt emittierte oder reflektierte Strahlung trifft auf einen ersten gekrümmten Spiegel 16 und wird dort auf einen zweiten leicht gekrümmten Spiegel 20 reflektiert. Die Bildebene des Zwischenbildes 18 befindet sich dicht vor einem würfelförmigen Strahlteiler 22.

Der Strahlteiler 22 besteht aus Silizium. Silizium weist eine hohe Transmission und eine geringe Dispersion im Infrarot auf bei 3 bis 5 Mikrometer und 1,5 Mikrometer. Der Strahlteiler 22 ist entlang einer Würfeldiagonale 28 in zwei Hälften 24 und 26 geteilt. An der Trennfläche sitzt ein dichroitisches Interferenzfilter. Die Hälften des Strahlteilers 22 sind mittels IR-durchlässigem Kleber entlang der Trennfläche so verbunden, daß sich keine Luft dazwischen befindet. Die Kantenlänge 30 des Würfels 22 ist auf den Querschnitt des Strahlenbündels 32 beschränkt.

Die an der Seite 30 in den Würfel 22 eintretende, divergente Strahlung läuft, je nach Wellenlänge, entweder in Transmission durch den Würfel 22 und tritt an der der Seite 30 gegenüberliegenden Seite 34 wieder aus dem Würfel 22 aus, oder sie wird in Reflexion an dem an der Trennfläche 28 angeordneten dichroitischen Interferenzfilter reflektiert und tritt an der in Fig. 1 unten angeordneten Seite 36 wieder aus.

Der transmittierte Strahl 38 (3 bis 5 Mikrometer) fällt auf ein dichtgepacktes drei-Linsen-Objektiv 14 aus Linsen 40, 42 und 44. Die Linse 40 ist als Zerstreuungslinse ausgebildet. Die Linsen 42 und 44 sind als Sammellinsen ausgebildet. Die Krümmungsradien und Durchmesser der Linsen 40, 42 und 44 sind so ausgelegt, daß die chromatische Abberation in der Bildebende korrigiert wird und die gewünschten Systemdaten (Gesichtsfeld, Brennweite, Eintrittspupille, Öffnungszahl) erhalten werden.

In der Bildebene des Sekundärobjektivs 14 ist ein Detektorarray 46 angeordnet, welches aus einer zweidimensionalen Anordnung von Detektorelementen besteht. Der Detektor ist gekühlt.

Der reflektierte Strahl 48 (1,5 Mikrometer) fällt auf eine Sammellinse 50. Dahinter befindet sich ein Planspiegel 52 zur Strahlfaltung. Eine Zerstreuungslinse 54, welche die gewünschte Brennweite einstellt und den Farblängsfehler des Strahlteilerwürfels korrigiert befindet sich hinter dem Planspiegel 52. Der Strahl 56 fällt auf einen zweiten Detektor 58, der sich in der Bildebene der zweiten Abbildungsoptik 60 befindet. Durch Verkippung des Planspiegels 52 um zwei nicht-parallele Achsen, die in der Ebene des Planspiegels liegen, kann das Gesichtsfeld der zweiten Abbildungsoptik innerhalb des Gesichtsfeldes der ersten Abbildungsoptik positioniert bzw. stabilisiert werden.

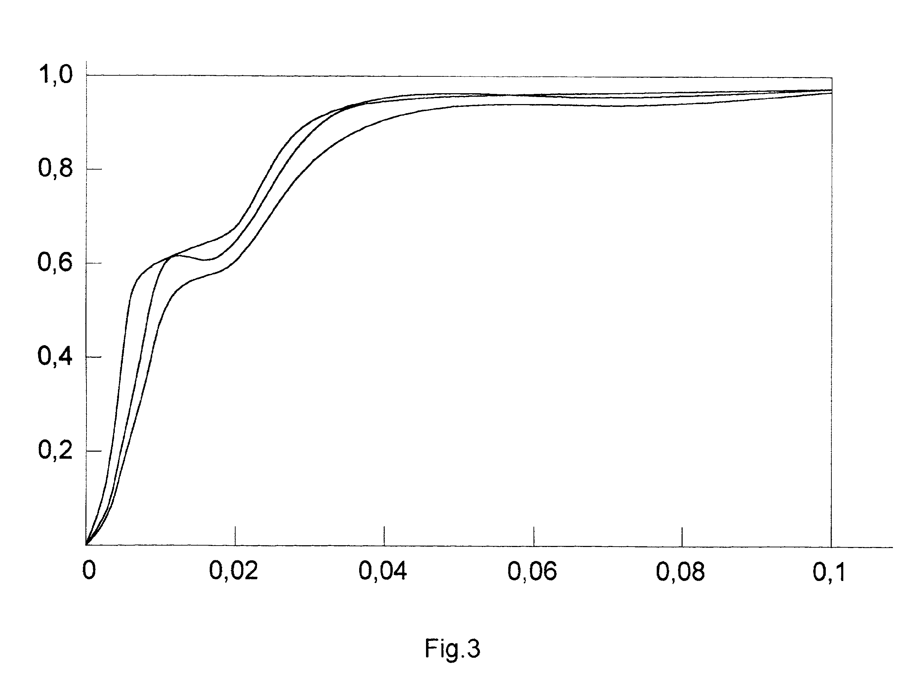

Ein Beispiel für die Abbildungseigenschaften der beschriebenen Optik ist in Fig. 3 in Form einer "Punkt-Verteilung-Funktion" (Point Spread Function) dargestellt, die mittels eines Strahlrechnungsprogramm erhalten wurde. Die Strahlung einer punktförmigen Lichtquelle würde sich demnach auf einen sehr kleinen Bereich konzentrieren. Abbildungsfehler in Form eines Astigmatismus sind nicht erkennbar.

## Patentansprüche

1. Optische Anordnung für Dual-Mode-Suchköpfe zur Abbildung einer Objektszene auf zwei Detektoren, enthaltend
(a) ein abbildendes optisches System (10) mit einem Abbildungsstrahlengang,
(b) strahlenteilenden Mitteln (22) zum Aufteilen des Strahlengangs in einen ersten und einen zweiten Teilstrahlengang (38, 48),
(c) einem ersten Detektor (46), auf welchen die Objektszene durch den ersten Strahlengang abgebildet wird und
(d) einen zweiten Detektor (58), auf welchen die Objektszene durch den zweiten Strahlengang abgebildet wird
**dadurch gekennzeichnet, daß**
(e) die strahlenteilenden Mittel (22) von einem massiven Körper gebildet sind, der eine strahlteilende Trennfläche (28) aufweist, die so liegt, daß der transmittierte (38) und der reflektierte Strahl (48) eines senkrecht zur Körperoberfläche in den Körper eintretenden Strahls (32) senkrecht zur Körperoberfläche (34, 36) aus dem Körper (22) austritt.

2. Optische Anordnung nach Anspruch 1, **dadurch gekennzeichnet, daß** die strahlenteilenden Mittel von einem strahlteilenden Würfel (22) gebildet sind, der aus zwei Würfelhälften (24, 26) besteht, die entlang einer Würfeldiagonalfläche (28) miteinander verbunden sind.

3. Optische Anordnung nach einem der vorgehenden Ansprüche, **dadurch gekennzeichnet, daß** auf einer der Verbindungsflächen (28) ein dichroitischer Interferenzfilter angebracht ist.

4. Optische Anordnung nach einem der vorgehenden Ansprüche, **dadurch gekennzeichnet, daß** die Verbindungsflächen (28) unmittelbar und ohne Luftspalt aneinandergrenzen.

5. Optische Anordnung nach einem der vorgehenden Ansprüche, **dadurch gekennzeichnet, daß** die Verbindungsflächen (28) mittels einer Verklebung verbunden sind, die im betrachteten Wellenlängenbereich eine hohe Durchlässigkeit aufweist.

6. Optische Anordnung nach einem der Ansprüche 1 bis 4, **dadurch gekennzeichnet, daß** die Verbindungsflächen (28) mittels optischen Ansprengen miteinander verbunden sind.

7. Optische Anordnung nach einem der vorgehenden Ansprüche, **dadurch gekennzeichnet, daß** die optische Anordnung als zweistufiges Objektiv (12, 14; 12,60) mit einem Zwischenbild (18) ausgebildet ist.

8. Optische Anordnung nach Anspruch 7, **gekennzeichnet durch** Vorrichtungen zum Laserschutz in dem Zwischenbild (18).

9. Optische Anordnung nach einem der Ansprüche 7 oder 8, **dadurch gekennzeichnet, daß** die Strahlteilenden Mittel (22) in der Nähe des Zwischenbildes (18) angeordnet sind.

10. Optische Anordnung nach einem der vorhergehenden Ansprüche, **dadurch gekennzeichnet, daß** der Planspiegel 52 so ausrichtbar ist, daß er das Gesichtsfeld des zweiten Strahlengangs (48) innerhalb des Gesichtsfeldes des ersten Strahlenganges (38) positioniert bzw. Stabilisiert.
